# EUROPEAN PATENT SPECIFICATION

(11) **EP 4 119 736 B1**
(45) Date of publication and mention of the grant of the patent: **21.05.2025**
(21) Application number: 21185455.9
(22) Date of filing: 13.07.2021
(51) Int. Cl.: E04D 11/00, A01G 9/02, A01G 9/033

(54) **COMPONENT FOR ASSEMBLING A GREEN ROOF OR WALL**
BAUTEIL ZUR MONTAGE EINES GRÜNEN DACHS ODER EINER GRÜNEN WAND
COMPOSANT D'ASSEMBLAGE D'UN TOIT OU D'UN MUR VERT

(43) Date of publication of application: 18.01.2023
(73) Proprietor: Sam Groofing Tech B.V., 2612 HJ Delft (NL)
(72) Inventor: Vermeer, Adrianus Maria Antonius, 5071 EE Udenhout (NL); van der Hart, Bartholomeus Leonardus Maria, 2631 PW Nootdorp (NL); Blaakman, Mark Leonard Wilhelmus, 5175 BH Loon op Zand (NL); de Juncker, Ton, 5451 NJ Mill (NL)
(74) Representative: De Vries & Metman

(56) References cited:
- EP-A1- 2 428 110
- WO-A1-2017/144904
- JP-A- 2010 220 591
- KR-A- 20130 061 783
- KR-B1- 101 327 216
- US-A1- 2013 031 833

## Description

The invention relates to a (building) component for assembling a green roof, such as a flat green roof, a substantially flat green roof, or a pitched roof, i.e. a roof having an inclination angle of more than 15°, e.g. corrugated or bituminous, or a green wall, e.g. a vertical wall, which component comprises a flexible layer having at least one pocket containing a substrate for vegetation. The invention further relates to a roof or wall comprising a plurality of such components.

Green roofs, also known as vegetation roofs, are booming worldwide. Due to ongoing urbanization, environmental issues, the urban heat island effect, etc., the demand for more green in, in particular, cities is increasing. Roofs are a suitable place to meet the demand for more vegetation. Subsidy schemes are available in more and more cities to encourage homeowners to invest in a green roof. These subsidies are often based on the water retention capacity of the roof (typically expressed in liters of water retainable per square meter). Building a vegetation roof is a labor-intensive process because such roofs are composed of several layers.

US 2015/334926 relates to a green or living wall including a waterproof layer to protect the surface from water and other materials from the living wall, and several plant support components extending horizontally in parallel to each other across the wall. "The components include a tubular wall filled with a growth media formed of hydromix and/or potting substrate, one or more layers of a water retaining material and an out support layer. Plants are planted on the plant support components with their plants being imbedded into the growth media. The architectural surface may be oriented vertically, horizontally, or at an angle, and filler material may be used to shape the plant support components into various three-dimensional shapes." KR 2013 0061783 A shows another prior art green wall.

EP 2 385 183 relates to a roof vegetation system comprising a base layer preferably embodied as a water-permeable, root barrier fabric. "A number of tile-like units are positioned thereon, wherein each unit comprises a filling and a fabric disposed around it. The filling comprises a substrate with seed disposed therein. The fabric is water-permeable and embodied so that it can be perforated on the underside." JP 2010 220591 A shows another prior art component for green roofs or green walls.

It is an object of the present invention to provide an improved (building) component for installing green roofs and/or walls.

This object is achieved by a component according to claim 1. To this end, the pocket containing the substrate for vegetation further contains an insert that at least in part shapes the exterior appearance of the pocket.

The insert comprises a frame, e.g. comprising tubes, beams, plate, board, scales and/or profiles, supporting the flexible layer of the at least one pocket from within. The insert comprises two parallel elements, such as tubes, beams, and/or profiles, e.g. attached to subframes at the (short) ends of the insert, defining exterior edges and/or the exterior top surface of the at least one pocket. In an example, the frame and/or elements define a pocket that is shaped as a parallelepiped, e.g. a cuboid, preferably with rounded long and/or short edges, e.g. having a radius larger than 3 mm, e.g. in a range from 5 to 25 mm.

In another embodiment, the insert tensions the flexible layer and/or the flexible layer is tensioned of over the insert.

The insert of the present invention provides an improved appearance of the component, e.g. in that the exterior of the pockets is well defined, e.g. corresponds to the intended or desired shape, and/or the shape of the component is more durable. Also, the insert facilitates transport, handling and/or installation of the component.

According to the invention, the insert comprises open ends, e.g. open short ends. When the insert is placed in a pocket to open, widen and/or shape the pocket, the pocket can be filled efficiently with substrate, through the open end.

In an embodiment, the flexible layer containing the substrate and the insert(s) is fixed to a rigid carrier, e.g. mechanically, such as by means of nails, staples, rivets, plugs, screws or bolts, or chemically, e.g. by means of an adhesive. At the end of the life span of the green roof, the vegetation will have formed a mat-like structure that can be removed relatively easily from the carriers, facilitating recycling of both.

Suitable substrates include perlite, lava, bims, crushed ceramic tiles, compost, peat, or a composition containing one or more of these components. In general, it is preferred that the substrate is granular and/or porous and/or contains no or a limited amount of organic material, e.g. less than 35 wt%, preferably less than 25 wt%, preferably optimum for sufficient and fast growth of the vegetation, because these properties improve retention of water and nutrients for the vegetation layer and improve the ratio of the weight of the dry substrate to the weight of the wetted substrate.

In an embodiment, the flexible layer comprises two or more pockets, most or each containing the substrate and/or an insert.

In an embodiment, the pocket or pockets are closed and envelop the substrate and the insert. In a particularly efficient embodiment, the pocket or pockets are closed by folding the flexible layer and fixing the flexible layer, in particular a folded end or flap, to the insert, e.g. by means of staples, nails, adhesive, welding, or Velcro.

In another embodiment, at least one insert, e.g. most or all inserts, comprises one or more baffles to restrict transport of the substrate within the pocket.

Another embodiment comprises vegetation, preferably plug plants, in particular sedum plugs, extending through the walls of the pockets and into the substrate.

In an embodiment, the insert, e.g. a frame, is made from a synthetic material, such as a thermoplastic polymer, e.g. polypropylene, polyester, e.g. PET, PEN or PBT, polyoxymethylene (POM), or acrylonitrile butadiene styrene (ABS), and optionally composed of or containing post-consumer recycled material(s), such as PEAL. PEAL is a blend low-density polyethylene (LDPE) and aluminium recycled from postconsumer aseptic packaging composed primarily of paper, low-density polyethylene (LDPE), and aluminium.

In an example, the insert or parts of the insert is/are made by means of injection molding.

In an embodiment, the insert is rigid, i.e. retains its shape during normal use (transport, installation) sufficiently to performs its function (supporting the flexible layer, including substrate and vegetation). It is preferred that the rigidity of the insert is such that when the modular unit, in a dry state, is held at two opposite edges, the insert bends less than 50 mm, preferably less than 30 mm, preferably less than 20 mm in the middle (halfway between the held edges) for each meter between the held edges.

In another embodiment, the vegetation comprises plug plants, e.g. extensive plants, such as sedum, or semi-extensive plants, such as grasses, herbs (chives, thyme, lavender, etc.), and perennials, extending through the walls of the pockets and into the substrate. By using plug plants instead of a fully grown layer of vegetation, such as a sedum mat, the vegetation layer matures/grows on the roof, which in turn enables more efficient use of (existing) nurseries for vegetation. In an example, a plug plant is provided for every 200 to 600 square centimeter of top surface of the modular units, reducing the required surface area in the nursery with a factor of at least 10, preferably at least 20. Factors up to 60 or more are possible, in particular in case of small diameter plug plants.

In an embodiment, the flexible material comprises a backing layer and a further layer attached to the backing layer and forming the pockets.

In a refinement, the further layer comprises folds forming the pockets. In a refinement, the backing layer has a thickness of at least 1 millimeter, preferably at least 3 millimeters. In a further refinement, the backing layer functions as a retention layer, e.g. providing a water retention of at least 1 liter per square meter, preferably at least 2 liters per square meter, preferably at least 5 liters per square meter. In an embodiment, the flexible layer comprises an anti-root barrier, preferably as its bottom surface.

In an embodiment, the flexible layer, and where applicable the backing layer and/or the further layer, is made from a textile material, preferably a nonwoven material, in particular a biodegradable nonwoven material.

In an embodiment, the backing layer and/or the further layer are made from a textile material, preferably from a nonwoven. Suitable nonwovens for the backing layer include needled nonwoven (geo)textiles, also known as needle felt, made e.g. from polyolefin, e.g. polypropylene, fibers or filaments. In a refinement, the backing layer functions also as the drainage layer.

Suitable nonwovens for the further or upper layer include calendered fleece made e.g. from polyolefin, e.g. polypropylene. In general, nonwovens that allow roots from the vegetation layer to penetrate and thus reach the substrate are preferred.

To facilitate recycling, it is preferred that the backing layer and the further layer are made from the same (type of polymer), e.g. PP or PE.

In an embodiment, the flexible layer is made from a biodegradable synthetic material, preferably a biodegradable thermoplastic polymer, such as polylactic acid (PLA).

Biodegradable plastics are plastics that decompose by the action of living organisms, usually microbes, into water, carbon dioxide, and biomass. In the present context, the biodegradable flexible layer will typically loose its capability to contain the substrate and roots after 5 to 10 years, more specifically between 6 and 8 years. Once the flexible layer is decomposed significantly, the vegetation, the roots of the vegetation, and the substrate form a more or less continuous layer extending over the carriers of the modular units forming the roof.

In an embodiment, the pocket or pockets filled with substrate and shaped, at least in part, by the insert(s) has/have a height in a range from 3 to 15 centimeters, preferably in a range from 4 to 8 centimeters, a width in a range from 10 to 60 centimeters, preferably in a range from 15 to 50 centimeters, a length in a range from 60 to 160 centimeters, preferably in a range from 80 to 140 centimeters, and/or the at least one flexible layer comprises at least two pockets, preferably at least three pockets containing an insert, preferably each containing an insert.

In an embodiment, adjacent pockets of a component and/or the pockets of adjacent components abut or are less than 4 centimeter, preferably less than 2 centimeters apart.

The roof and flexible layer with pockets according to the present invention intrinsically provide good resistance to shear forces. Shear forces generally cause major complications in the construction and installation of green roofs. Further, the flexible layer can be installed with the substrate already contained in the pockets, which saves labor, reduces or avoids the risk of spilling at the construction site, and which facilitates precisely defining the amount and/or the composition of the substrate. Further, the pockets facilitate a more homogenous distribution of the substrate over the roof.

In another embodiment, the component is attached, e.g. directly, to a water-resistant layer covering the roof or wall, e.g. by means of hook-and-pile fasteners (Velcro). In an embodiment, the hooks are attached, e.g. adhered, to or integrated in the water-resistant layer. The hooks can be provided in the form of strips or patches, e.g. having the hooks on one side and an adhesive layer on the other side to adhere the strips or patches to the water-resistant layer.

In an embodiment, the piles, which, in this context include loops and tangled fibers, e.g. in a nonwoven textile, are attached to or part of the bottom side of the flexible layer. In an embodiment, the bottom layer of the flexible layer provides the piles, e.g. is made from a nonwoven textile, and thus can be fastened directly to the hooks on or in the water-resistant layer.

In an embodiment, the substrate in the flexible layer provides a water retention of at least 10 liters per square meter of the layer, preferably at least 20 liters per square meter. Thus, the substrate serves as a substantial buffer for water and helps reduce peak loads on sewage, for instance during heavy rain. Water retention can be adjusted to a specific design by selecting the height of and the amount of substrate in the pockets.

The invention further relates to a green roof or wall comprising a roof or wall surface, preferably a water resistant layer covering the roof or wall surface, and a plurality of components according to the present invention installed on the roof or against the wall.

In an embodiment, the green wall comprises a vertical or near vertical wall surface, e.g. at an angle in a range from 80 to 100 degrees with the (horizontal) ground, and the pockets contain a baffle, gutter, or receptable(s) for supporting vegetation in a vertical of inclined position.

For the sake of completeness, reference is made to the following publications.

US 2020/095770 relates to a stormwater management apparatus and method including a water storage component, and a drainage component. The water storage component, and protective component form a composite that allows for stormwater to be retained to an appropriate extent, and for excess stormwater to be adequately controlled. The water storage component and drainage component are provided in a single unit. The embodiment shown in Figure 5B of US 2020/095770 comprises multiple fleeces stitched together.

DE 4 405 523 relates to a casing mat that is made of a double fabric and is filled with sand, bentonite, concrete etc. and has a bottom layer and a top layer woven with the bottom layer at least on the edges running in the warp direction and can be filled to form edge beads.

JP 2003 268773 relates, in a machine translation, to "Greening of walls and rooftops of artificial structures such as concrete buildings and highways" and a vegetative bag wherein "a plurality of partitions are provided at one or a fixed width in the center from the mouth of the bag to the bottom, and the partitions are propagated. Make a continuous pocket into which the material is inserted. The culture soil is accommodated in two or more differentiated bags formed by the partition, and the mouth is closed with a suture or a stapler."

DE 20 2012 104 884 U1 relates to a vertical greening system, comprising a support profile which can be fastened to a load-bearing wall by means of anchoring elements.

DE 20 2004 020 122 U1 relates to a bag for growing vegetation on roofs has upper and lower layers made from a porous material, e.g. cloth. It is filled with a plant growth medium and tapers towards its edges.The invention will now be explained with reference to the figures, in which an example of the invention is shown.
Figure 1 is an isometric view of an existing pitched roof, where tiles are replaced with green roof components according to the present invention.
Figure 2 is an isometric of a green roof component used in the roof of Figure 1.
Figure 3 is a perspective view of an insert according to the present invention.
Figures 4 and 5 show how the insert of Figure 3 is placed in a pocket of a component for installing a green roof.
Figure 6 is a perspective view of a modular unit for a green roof in accordance with the present invention.
Figure 7 is a side view of a stack of modular units shown in Figure 6.

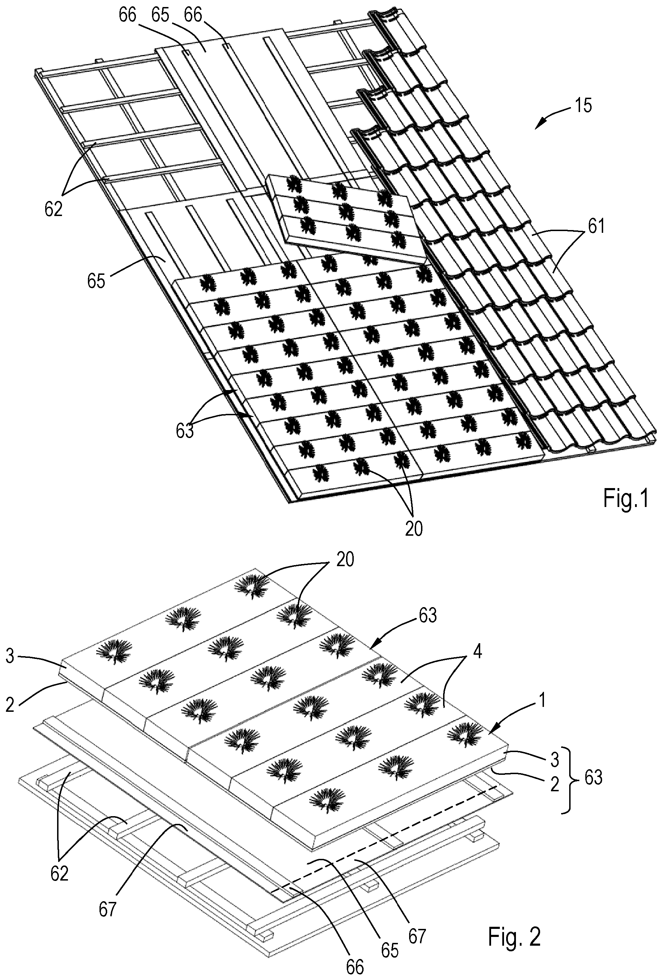

Figure 1 shows an existing pitched roof 15, where tiles 61 mounted on battens 62 are replaced with green roof components 63 according to the present invention and shown in more detail in Figure 2. The green roof elements 63 comprise, similar to the embodiments described above, a flexible layer 1 with a backing or bottom layer 2 made from a relatively thick nonwoven, in this example a needle felt, and an upper layer made from a calendered fleece 3 attached to the backing layer, e.g. by straight stitches extending over the backing layer, from one of the short edges to the other short edge, creating pockets 4, and a stitch along a short end to close the pockets at that end.

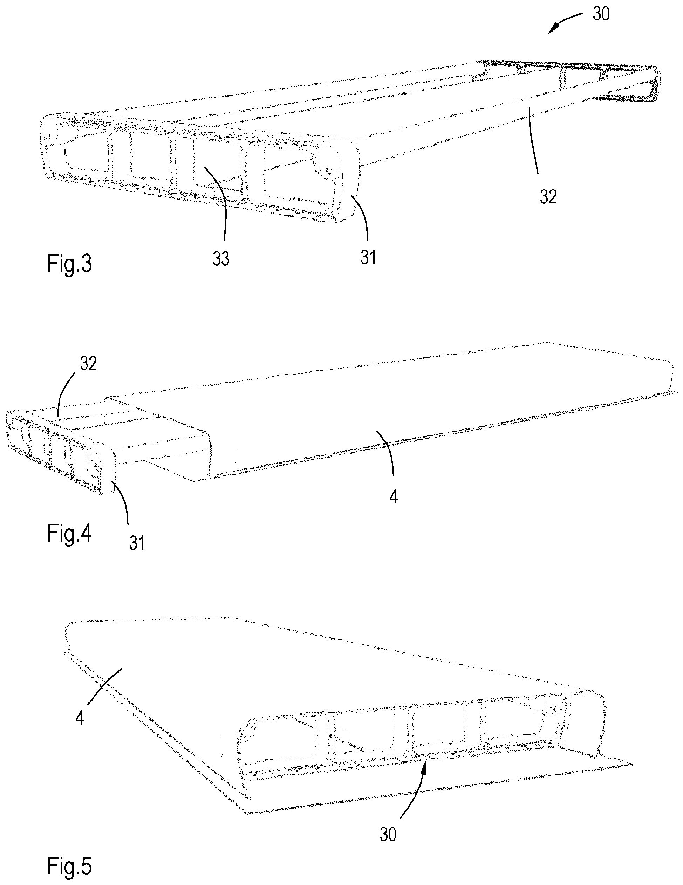

In accordance with the present invention, each pocket 4 contains an insert 30, shown in Figures 3 to 5, that shapes and supports the exterior appearance of the pocket. The insert is a substantially rectangular frame comprising two open subframes 31 at each short end and two parallel tubes 32 connecting the subframes. Once installed, the insert shapes the exterior appearance of the pocket, in particular the topside of the installed pocket. The subframes and tubes are made e.g. by injection molding or extruding a thermoplast, such as polypropylene, polyester, e.g. PET, PEN or PBT, polyoxymethylene (POM), or acrylonitrile butadiene styrene (ABS), and optionally composed of or containing post-consumer recycled material(s), such as PEAL.

In this example, the insert is provided with a baffle 33 fixed to the subframes 31 and extending parallel to the tubes 32.

Figure 4 shows how the insert is slidingly inserted into a pocket, whereas Figure 5 shows the insert accommodated inside the pocket. The, still open, pocket extends beyond both ends of the insert. Next, one end of the pocket is closed by folding the excess flexible layer and fixing the flexible layer to the insert, e.g. by stapling.

With one end closed, the pockets are filled with a substrate, in this example perlite, and the remaining end of the pocket is close, again by folding the excess flexible layer and fixing the flexible layer to the insert.

The top surfaces of the pockets 4 are provided with openings, e.g. slits, and plug plants, in particular sedum plugs 20, are inserted through the openings and into the substrate. The components for installing a green roof, with pockets containing substrate and carrying plug plants, are thus ready for stacking on a pallet and for storage and transport to a building site.

Figures 1 and 2 further show sheets 65 of waterproof and root-proof material, such as EPDM, comprising strips, e.g. three parallel strips 66, or patches of hooks for hook-and-pile fastening of a flexible layer 1. Thus, the backing of the flexible layer of a green roof element can be touch fastened to the sheets of waterproof material. Put differently, the strips of hooks and the nonwoven backing together provide hook-and-pile (Velcro) fastening.

The sheets 65 are attached, e.g. adhered, to a support panel, e.g. a panel of plywood or MDF (hidden from view by the sheet on top of it). At least two edges 67 of the waterproof sheet extend beyond the edges of the support panel. Also, along these edges the sheet is detached from, i.e. does not adhere to the support panel over a predetermined margin, e.g. 5 to 10 cm.

At a building or renovation site, the tiles are removed from an existing roof and the support panels with the sheets of waterproof material are fastened to the battens on the roof, by folding away the sheet along the margin mentioned above and e.g. nailing, stapling, or screwing the panel to the battens beneath. Next, the edges of the sheet are folded back to overlap the sheet on an adjoining support panel and sealed together, e.g. by means of heating or an adhesive, at regions of overlap, e.g. along a long and a short side of each sheet, to provide waterproof seams and thus a waterproof layer covering the roof surface.

Next, the component for installing a green roof are taken from the stack, lifted onto the roof, and placed on the roof such that adjoining units abut and hook-and-pile fastening to the roof is established, as illustrated in Figure 1.

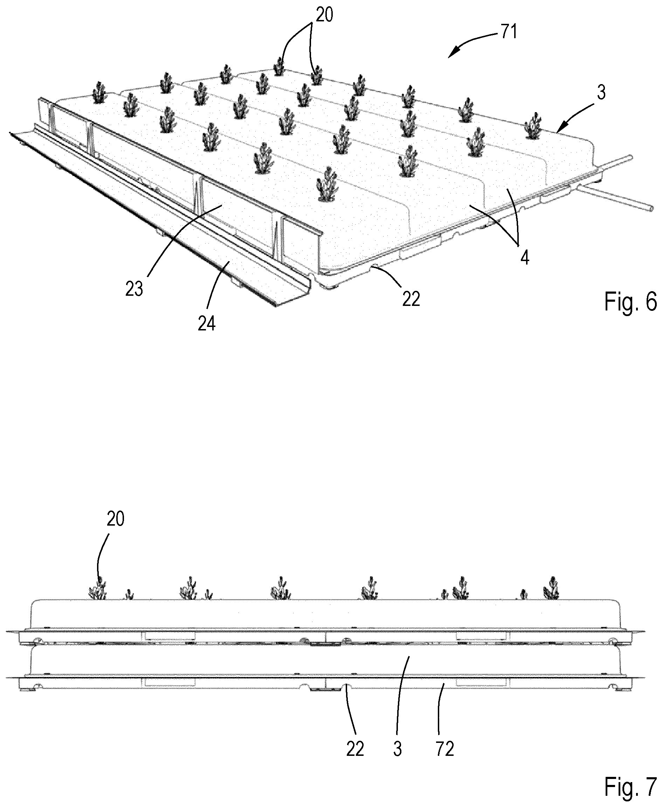

Figures 6 and 7 show a modular component 71 for use in a flat green roof. The unit comprises a rigid carrier 72, which doubles as a drainage component, and a flexible layer 3 supported on the rigid carrier. The flexible layer comprises a plurality of closed pockets 4, e.g. four pockets running the length the modular unit 71. Each of the pockets contains a granular substrate, such as perlite, and an insert inside each pocket.

In this example, the flexible layer with the pockets and the carrier have a length of 120 centimeter and a width of 0,8 meter, corresponding to the footprint of a Europallet. The modular units are thus ready stacking on a pallet, as shown in Figure 7, and for storage and transport to a building site. At a building site, the modular units are taken from the stack, lifted on a roof, and placed on the roof such that the carriers of adjoining interlock. The carriers 72 can be provided with openings or recesses 22 to facilitate laying cables or conduits beneath the modular units. Also, a wall 23 and/or a gutter 24 can be provided along the perimeter of the installed modular units.

The components with the inserts according to the present invention are lightweight and provide good resistance to forces exerted on it during storage, transport and installation. The units simplify logistics and can be installed in a straightforward manner, in particular by placing the units on a roof, next to each other in a desired or pre-designed pattern and preferably interlocking, without the need of providing, e.g. depositing and spreading, at the construction site, the substrate and/or vegetation. The units save labor, improve ergonomics, reduce or avoid the risk of spilling, in particular at the construction site, and/or facilitate installation of the green roof. The pocket or pockets facilitate precisely defining the amount and/or the composition of the substrate. Further, the pockets facilitate a more homogenous distribution of the substrate over the roof. The inserts further provide an improved appearance of the component, contribute to maintaining that appearance, and provide mechanical strength.

The invention is not limited to the described embodiments and can be varied within the framework of the claims. For instance, the inserts can be made of a plate or board, preferably perforated and e.g. provided with folds to obtain the desired shape of the pockets.

## Claims

1. Component for assembling a green roof, such as a flat green roof, a substantially flat green roof, or a pitched roof, or a green wall, which component comprises a flexible layer (1) having at least one pocket (4) containing a substrate for vegetation,
wherein the at least one pocket further contains an insert (30) that at least in part shapes the exterior appearance of the pocket,
wherein the insert comprises a frame supporting the flexible layer of the at least one pocket,
**characterized in that** the frame has two subframes (31) at opposite ends of the at least one pocket and two parallel elements (32), such as tubes, beams, and/or profiles, connecting the subframes and defining exterior edges and the exterior top surface of the at least one pocket,
wherein the subframes define open ends for filling the pocket with substrate.

2. Component according to any one of the preceding claims, wherein the insert tensions the flexible layer and/or the flexible layer is tensioned of over the insert.

3. Component according to any one of the preceding claim,
wherein the flexible layer comprises two or more pockets, most or each containing the substrate and an insert.

4. Component according to any one of the preceding claim,
wherein pocket or pockets are closed and envelop the substrate and the insert.

5. Component according to any one of the preceding claim, wherein the pocket or pockets are closed by folding the flexible layer and fixing the flexible layer to the insert.

6. Component according to any one of the preceding claims, wherein at least one insert comprises one or more baffles to restrict transport of the substrate within the pocket.

7. Component according to any one of the preceding claims, comprising vegetation, preferably plug plants (in particular sedum plugs), extending through the walls of the pockets and into the substrate.

8. Component according to any one of the preceding claims,
wherein the flexible layer comprises a backing layer and a further layer attached to the backing layer and forming the pocket(s) and/or wherein the flexible layer, and where applicable the backing layer and/or the further layer, is made from a textile material, preferably a nonwoven material.

9. Component according to any one of the preceding claims, wherein the pocket or pockets filled with substrate and shaped, at least in part, by the insert(s) has/have a height in a range from 3 to 15 centimeters, preferably in a range from 4 to 8 centimeters, a width in a range from 10 to 60 centimeters, preferably in a range from 15 to 50 centimeters, a length in a range from 60 to 160 centimeters, preferably in a range from 80 to 140 centimeters.

10. Component according to any one of the preceding claims,
wherein the at least one flexible layer comprises at least two pockets, preferably at least three pockets containing an insert, preferably each containing an insert.

11. Green roof or wall comprising a roof or wall surface,
preferably a water resistant layer covering the roof or wall surface, and a plurality of components according to any one of the preceding claims installed on the roof or against the wall.

12. Green wall according to claim 11 comprising a vertical or near vertical wall surface and wherein the pockets contain a baffle, gutter, or receptable(s) for supporting vegetation in a vertical of inclined position.

## Patentansprüche

1. Komponente zum Zusammenbauen eines Grün-Dachs, wie z.B. eines flachen Grün-Dachs, eines im Wesentlichen flachen Grün-Dachs oder eines Schrägdachs, oder einer Grün-Wand, welche Komponente eine flexible Schicht (1) aufweist, die wenigstens eine Tasche (4) hat, die ein Substrat für Vegetation enthält,
wobei die wenigstens eine Tasche ferner einen Einsatz (30) enthält, der wenigstens teilweise die Außenerscheinung der Tasche formt,
wobei der Einsatz einen Rahmen aufweist, der die flexible Schicht der wenigstens einen Tasche hält,
**dadurch gekennzeichnet, dass** der Rahmen zwei Unterrahmen (31) an entgegengesetzten Enden der wenigstens einen Tasche und zwei parallele Elemente (32), wie z.B. Rohre, Balken und/oder Profile hat, welche die Unterrahmen verbinden und welche Außenränder und die obere Außenfläche der wenigstens einen Tasche definieren,
wobei die Unterrahmen offene Enden, zum Füllen der Tasche mit Substrat, definieren.

2. Komponente gemäß irgendeinem der vorigen Ansprüche, wobei der Einsatz die flexible Schicht spannt und/oder wobei die flexible Schicht über den Einsatz gespannt ist.

3. Komponente gemäß irgendeinem vorigen Anspruch, wobei die flexible Schicht zwei oder mehr Taschen aufweist, von denen die meisten oder jede das Substrat und einen Einsatz enthält.

4. Komponente gemäß irgendeinem vorigen Anspruch, wobei die Tasche oder die Taschen geschlossen sind und das Substrat und den Einsatz umhüllen.

5. Komponente gemäß irgendeinem vorigen Anspruch, wobei die Tasche oder die Taschen geschlossen sind durch Falten der flexiblen Schicht und Fixieren der flexiblen Schicht an dem Einsatz.

6. Komponente gemäß irgendeinem der vorigen Ansprüche, wobei wenigstens ein Einsatz eine oder mehrere Trennwände aufweist, um einen Transport des Substrats innerhalb der Tasche einzuschränken.

7. Komponente gemäß irgendeinem der vorigen Ansprüche, aufweisend Vegetation, bevorzugt Steckpflanzen (insbesondere Sedum-Stecker), die sich durch die Wände der Taschen hindurch in das Substrat hinein erstrecken.

8. Komponente gemäß irgendeinem der vorigen Ansprüche,
wobei die flexible Schicht eine Trägerschicht und eine weitere Schicht aufweist, welche auf der Trägerschicht angebracht ist und welche die Tasche(n) bildet und/oder wobei die flexible Schicht, und ggf. die Trägerschicht und/oder die weitere Schicht, aus einem Textilmaterial, bevorzugt einem Filzmaterial, gemacht ist.

9. Komponente gemäß irgendeinem der vorigen Ansprüche, wobei die Tasche oder die Taschen, die mit Substrat gefüllt ist/sind und zumindest teilweise durch den/die Einsatz/Einsätze geformt sind, eine Höhe in einem Bereich von 3 bis 15 Zentimetern, bevorzugt in einem Bereich von 4 bis 8 Zentimetern, eine Breite in einem Bereich von 10 bis 60 Zentimetern, bevorzugt in einem Bereich von 15 bis 50 Zentimetern, eine Länge in einem Bereich von 60 bis 160 Zentimetern, bevorzugt in einem Bereich von 80 bis 140 Zentimetern, hat/haben.

10. Komponente gemäß irgendeinem der vorigen Ansprüche,
wobei die wenigstens eine flexible Schicht aufweist wenigstens zwei Taschen, bevorzugt wenigstens drei Taschen, die einen Einsatz enthalten, wobei bevorzugt jede einen Einsatz enthält.

11. Grün-Dach oder -Wand, aufweisend eine Dach- oder Wandfläche, bevorzugt eine wasserfeste Schicht, welche die Dach- oder Wandfläche abdeckt, und eine Mehrzahl von Komponenten gemäß irgendeinem der vorigen Ansprüche, die auf dem Dach oder an der Wand installiert sind.

12. Grün-Wand gemäß Anspruch 11, aufweisend eine vertikale oder annährend vertikale Wandfläche, wobei die Taschen eine Trennwand, eine Rinne oder eine Aufnahme(n) zum Halten von Vegetation in einer Vertikalen einer geneigten Position enthalten.

## Revendications

1. Composant pour l'assemblage d'un toit vert, tel qu'un toit vert plat, un toit vert sensiblement plat, ou un toit incliné, ou un mur vert, ledit composant comprenant une couche flexible (1) présentant au moins une poche (4) contenant un substrat pour végétation,
dans lequel l'au moins une poche contient en outre un insert (30) qui façonne au moins en partie l'aspect extérieur de la poche,
dans lequel l'insert comprend un châssis supportant la couche flexible de l'au moins une poche,
**caractérisé en ce que** le châssis présente deux sous-châssis (31) au niveau d'extrémités opposées de l'au moins une poche et deux éléments parallèles (32), tels que des tubes, des poutres et/ou des profilés, raccordant les sous-châssis et
définissant des bords extérieurs et la surface supérieure extérieure de l'au moins une poche,
dans lequel les sous-châssis définissent des extrémités ouvertes permettant de remplir la poche de substrat.

2. Composant selon l'une quelconque des revendications précédentes, dans lequel l'insert tend la couche flexible et/ou la couche flexible est tendue sur l'insert.

3. Composant selon l'une quelconque des revendications précédentes, dans lequel la couche flexible comprend deux poches ou plus, la plupart ou chacune contenant le substrat et un insert.

4. Composant selon l'une quelconque des revendications précédentes, dans lequel la ou les poches est/sont fermée(s) et enveloppe(nt) le substrat et l'insert.

5. Composant selon l'une quelconque des revendications précédentes, dans lequel la poche ou les poches est/sont fermée(s) par pliage de la couche flexible et fixation de la couche flexible sur l'insert.

6. Composant selon l'une quelconque des revendications précédentes, dans lequel au moins un insert comprend un ou plusieurs déflecteurs pour restreindre le transport du substrat à l'intérieur de la poche.

7. Composant selon l'une quelconque des revendications précédentes, comprenant de la végétation, de préférence des plantes en mottes (en particulier des mottes de sédum), s'étendant à travers les parois des poches et dans le substrat.

8. Composant selon l'une quelconque des revendications précédentes, dans lequel la couche flexible comprend une couche de support et une couche supplémentaire fixée à la couche de support et formant la/les poche(s) et/ou dans lequel la couche flexible, et le cas échéant la couche de support et/ou la couche supplémentaire, est/sont composée(s) d'un matériau textile, de préférence un matériau non-tissé.

9. Composant selon l'une quelconque des revendications précédentes, dans lequel la poche ou les poches remplie(s) de substrat et formée(s), au moins en partie, par l'insert/les inserts présente(nt) une hauteur comprise dans une plage de 3 à 15 centimètres, de préférence dans une plage de 4 à 8 centimètres, une largeur comprise dans une plage de 10 à 60 centimètres, de préférence dans une plage de 15 à 50 centimètres, une longueur comprise dans une plage de 60 à 160 centimètres, de préférence dans une plage de 80 à 140 centimètres.

10. Composant selon l'une quelconque des revendications précédentes, dans lequel l'au moins une couche flexible comprend au moins deux poches, de préférence au moins trois poches contenant un insert, de préférence chacune contenant un insert.

11. Toit ou mur vert comprenant une surface de toit ou de mur, de préférence une couche résistante à l'eau recouvrant la surface de toit ou de mur, et une pluralité de composants selon l'une quelconque des revendications précédentes installés sur le toit ou contre le mur.

12. Mur vert selon la revendication 11 comprenant une surface de mur verticale ou presque verticale et dans lequel les poches contiennent un déflecteur, une gouttière ou un ou des réceptacle(s) pour soutenir la végétation dans une position verticale ou inclinée.
